(19) Europäisches Patentamt / European Patent Office / Office européen des brevets

(11) **EP 1 315 946 B1**

(12) **EUROPÄISCHE PATENTSCHRIFT**

(45) Veröffentlichungstag und Bekanntmachung des Hinweises auf die Patenterteilung:
**31.03.2010 Patentblatt 2010/13**

(21) Anmeldenummer: **01956312.1**

(22) Anmeldetag: **11.07.2001**

(51) Int Cl.:
*G01D 5/14* (2006.01)  *G01B 7/30* (2006.01)

(86) Internationale Anmeldenummer:
**PCT/DE2001/002596**

(87) Internationale Veröffentlichungsnummer:
**WO 2002/018880 (07.03.2002 Gazette 2002/10)**

(54) **VERFAHREN ZUR ERWEITERUNG DES ABSOLUTWINKELMESSBEREICHES BEI MAGNETFELDSENSOREN**

METHOD FOR EXTENDING THE MEASURING RANGE OF AN ABSOLUTE ANGLE IN MAGNETIC-FIELD SENSORS

PROCEDE POUR L'EXTENSION DE L'ETENDUE DE MESURE ANGULAIRE ABSOLUE POUR DES CAPTEURS DE CHAMP MAGNETIQUE

(84) Benannte Vertragsstaaten:
**AT BE CH CY DE DK ES FI FR GB GR IE IT LI LU MC NL PT SE TR**

(30) Priorität: **30.08.2000 DE 10042602**

(43) Veröffentlichungstag der Anmeldung:
**04.06.2003 Patentblatt 2003/23**

(73) Patentinhaber: **ROBERT BOSCH GMBH**
**70442 Stuttgart (DE)**

(72) Erfinder:
• **MEYER, Marcus**
  **76307 Karlsbad (DE)**
• **KLIFFKEN, Markus, G.**
  **79588 Efringen-Kirchen (DE)**
• **THOELKE, Holger**
  **77880 Sasbach (DE)**

(74) Vertreter: **Hörschler, Wolfram Johannes**
**Isenbruck Bösl Hörschler Wichmann LLP**
**Eastsite One**
**Seckenheimer Landstrasse 4**
**68163 Mannheim (DE)**

(56) Entgegenhaltungen:
**EP-A- 1 037 017    EP-A- 1 069 400**
**WO-A-96/16316    DE-A- 3 141 015**
**DE-A- 4 440 214    DE-A- 19 539 134**
**DE-A- 19 722 016    DE-A- 19 817 356**
**DE-A- 19 818 799**

• **PATENT ABSTRACTS OF JAPAN vol. 006, no. 034 (P-104), 2. März 1982 (1982-03-02) & JP 56 153204 A (NEC HOME ELECTRONICS LTD), 27. November 1981 (1981-11-27)**

**Beschreibung**

Technisches Gebiet

Bei heutigen Winkelmesserverfahren werden Magnetfeldsensoren in einer Messbrückenanordnug betrieben. Ein Absolutwinkelmessung über einen Winkelbereich von 360° ist bei AMR-Sensoren nicht ohne größeren Aufwand möglich. Bei Hall- bzw. GMR-Sensoren ist die Bereichserweiterung auf 360° bei AMR-Sensoren ist ein Meßbereich von 180° möglich.

Stand der Technik

Bei heutigen Magnetfeldsensoren, die eine Brückenschaltung (beispielsweise Wheatstone'sche Brücke) enthalten, ist eine 360° Absolutwinkelmessung nur schwierig, wenn überhaupt durchzuführen. Ein Sensorelement liefert eine Spannung, die der Beziehung (1) gehorcht:

$$U_\theta = U_0 + \Delta U \cos^2(\theta) \qquad (1)$$

Bei AMR-Sensoren ist ohne zusätzliche elektrische Beschaltung somit eine Absolutwinkelmessung bis zu 180° möglich. Zur Messung des Absolutwinkels sind zwei, um jeweils 45° zueinander angeordnete Vollbrücken notwendig. Eine dieser Vollbrücken liefert ein Sinussignal, die andere Vollbrücke ein um 90° phasenverschobenes Cosinussignal des zu messenden Spannungsverlaufes.

Werden die Ausgangsspannungen zueinander ins Verhältnis gesetzt, kann über die Arctan-Funktion der Absolutwinkel der Phasenverschiebung ermittelt werden. Dazu dient folgende Beziehung:

$$\theta' = \frac{1}{2}\arctan\left(\frac{U\sin(\theta)}{U\cos(\theta)}\right) \qquad (2)$$

Die quadratische Beziehung gemäß Gleichung (1) läßt nur eine Sägezahnfunktion mit einer 180°-Abdeckung zu.

Eine 180°-periodische Winkelauflösung liefert bei einer Vollumdrehung (360 Winkelgrade) mehrdeutige Werte. Oft ist jedoch aus funktionellen Erwägungen ein eindeutiger Wertbereich gefordert oder erwünscht. Dies läßt sich zum Beispiel durch zusätzliche Magnetspulen innerhalb oder außerhalb des Sensorelementes realisieren. Solche Lösungen erfordern jedoch teure Sensoren und aufwendige Auswerteschaltungen. Diesen zusätzlichen Schaltungsaufwand und damit verbundene zusätzliche Kosten gilt es zu vermeiden. Desweiteren lassen sich Sensoren mit Magnetspulen nur schwer in schon bestehenden Schaltungen nachrüsten.

Patentdokumente DE 197,22,016, DE 195,39,134, DE 198,17,356, DE 198,18,799 und DE 44,40,214 beschreiben jeweils ein Winkelmessverfahren, bei dem ein Feinwinkel durch die Auswertung zweier Signale von Magnetfeldsensoren bestimmt wird. Im Vollwinkelbereich ist das Signal mehrdeutig, die Mehrdeutigkeit kann jedoch dadurch aufgehoben werden, dass dem Feinsignal durch eine ergänzende Bestimmung ein grober Winkelbereich wie etwa ein Kreissegment zugeordnet wird.

Darstellung der Erfindung

Mit der erfindungsgemäß vorgeschlagenen Lösung kann eine Absolutwinkelberechnung geschaffen werden, die keine erhöhten Hardwareanforderungen darstellt. Bei bereits bestehenden Auswerteschaltungen, die mit einem A/D-Wandler bestückt sind, lassen sich mit nur geringem Nachrüstaufwand Modifikationen in der Schaltung zur Durchführung des erfindungsgemäßen Verfahrens vornehmen. Über die Freiheitsgrade bei der Auslegung der Nomierungsfaktoren $A_{sin}$, $A_{cos}$ läßt sich das Auswerteverfahren problemlos und einfach an andere Sensoren anpassen. Die Offsetwerte $K_{sin}$ und $K_{cos}$ lassen sich zum Beispiel bei der Herstellung des Auswertesystemes im Rahmen der Bandendeprogrammierung vornehmen.

Mit der erfindungsgemäß vorgeschlagenen Lösung kann die Berechnung der Offset-Werte $K_{sin}$ bzw. $K_{cos}$ sowohl im Analog- als auch im Digitalteil einer Auswerteschaltung erfolgen.

Mit dem erfindungsgemäß vorgeschlagenen Verfahren ist eine Streckung der Arctan-Funktion von 180° auf 360° und somit eine Erweiterung des Wertebereiches möglich. Werden die Übergänge der 360°-Flanken erfaßt, ist mit dem erfindungsgemäßen Verfahren auch eine inkrementale Messung oder eine Absolutwinkelerfassung von solchen Absolutwinkeln möglich, die größer als 360° sind. Auch bei dieser Ausführungsvariante der erfindungsgemäß vorgeschlagenen Lösung kann auf zusätzliche Magnetspulen, die in Sensorelemente integriert sind, verzichtet werden. Damit läßt sich die Ausführungsvariante auch an bereits ausgelieferten bzw. bereits in Betrieb befindlichen Auswerteschaltungen ohne großen Nachrüstaufwand implementieren. Mit dem erfindungsgemäß vorgeschlagenen Verfahren der Vergrößerung des Absolutwinkelmessbereiches lassen sich innerhalb einer Vollumdrehung von 360° genaueste Absolutwinkel messen, ferner ist mit dem erfindungsgemäß vorgeschlagenen Verfahren eine Erhöhung des Messbereiches um ein Vielfaches einer 360°-Umdrehung problemlos möglich.

Zeichnung

Anhand der Zeichnung wird die Erfindung nachstehend näher erläutert.

Es zeigt:

Fig. 1 den Verlauf phasenverschobener Eingangssignale in Gestalt von Sinus- und Cosinus-Anteil einer Eingangsspannung, die um 90° zueinander phasenverschoben sind und der Sägezahnverlauf des Absolutwinkels aufgeteilt in zwei Sägezahnsegmente von je 180°,

Fig. 2 die Spannungsverläufe der Sinus- bzw. Cosinusspannungsanteile und deren Abbildung auf eine 360°-Vollumdrehung des Absolutwinkels,

Fig. 3 eine Auswerteschaltung, bei der die Nomierung der Amplituden der Eingangssignale im Analogteil durchgeführt wird und

Fig. 4 eine Auswerteschaltung gemäß Fig. 3, mit Normierungsfaktoren sowie der Offsetwerte im Digitalteil der Auswerteschaltung.

Ausführungsvariante

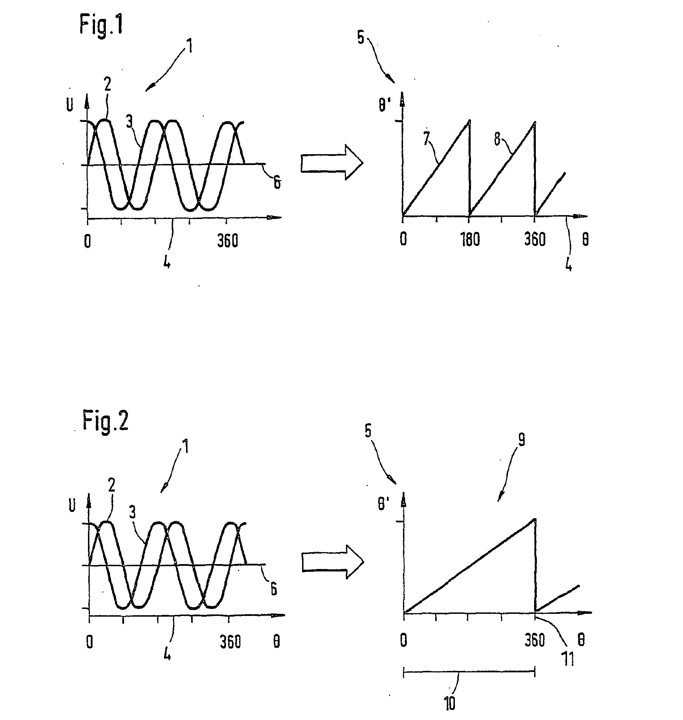

Aufgrund der quadratischen Beziehung gemäß Gleichung 1 stellt sich bei Spannungsverläufen gemäß der Fig. 1 die mit Bezugzeichen 1 gekennzeichnet sind der dort wiedergegebene Spannungsverlauf ein. Der Spannungsverlauf ist in einen Sinusanteil 2 sowie in einen Cosinusanteil 3 zu unterteilen, die untereinander wie bereits weiter oben erwähnt, um 90° zueinander phasenverschoben sind. Mit Bezugzeichen 6 ist der Offset der Brückenschaltung von $U_{brücke}$ = $U_{versorgung}$/2 bezeichnet. Setzt man den Sinusanteil 2 sowie den Cosinusanteil 3 der Spannung zueinander ins Verhältnis, so kann über die arctan-Funktion der Absolutwinkel gemäß der weiter oben bereits wiedergegebenen Gleichung 2 ermittelt werden. Die Sägezahnfünktion gemäß Fig. 1 ist durch einen ersten 180°-Sägezahn gekennzeichnet durch Bezugzeichen 7 näher charak-terisiert sowie durch einen zweiten mit Bezugzeichen 8 näher charakterisierten zweiten 180° Sägezahn. Die bei dieser Lösung aus dem Stand der Technik bekannten Sägezähne erstrecken sich lediglich über einen Messbereich von 0 bis 180° bzw. von 180° bis 360°. Bei einer Weiterverarbeitung der solcherart erhaltenen Absolutwinkelsignale kommt es für verschiedene Absolutwinkel θ' pro Sägezahn 7 bzw. 8 zu mehrdeutigen Zuordnungen. Die Doppeldeutigkeit der Absolutwinkelinformationen 7 und 8, über eine volle 360°-Umdrehung betrachtet, ist oft unerwünscht. Daher ist eine einfache Lösung zur eindeutigen Winkelmessung zur Bildung eindeutig definierter Werte wünschenswert.

Das erfindungsgemäß vorgeschlagene Verfahren zur Erweiterung der Erfassung des Absolutwinkelbereiches umfaßt einen Magnetfeldsensor AMR/GMR-Sensor oder auch Hall-Elemente sowie eine Auswerteschaltung 12, beispielsweise einen Controller. Die Ausgangsspannungen 2 bzw. 3 werden in einem A/D-Wandler 15 digitalisiert und anschließend dem Arctan-Algorithmus 27 zugeführt. Dieser liefert die Absolutwinkelinformation für weitere Auswertungszwecke in einer Signalweiterverarbeitung. Die erweiterte Absolutwinkelmessung beruht auf der Ermittlung des Winkels aus dem Verhältnis der Eingangsgrößen, beispielsweise des Sinusanteiles 2 und des Cosinusanteiles 3 der Spannung.

Es gilt:

$$\tan\theta = \frac{A\sin\theta}{B\cos\theta} = \frac{x}{y} \qquad (3)$$

wird im Nenner der Gl. (3) ein Offset C addiert, so modifiziert y zu y'.

Der Offset C wird im folgenden entweder als eine Anhebung oder einer Absenkung betrachtet.

$$y' = B\cos\theta + C \qquad (4)$$

Eingesetzt in die Gleichung (3) ergibt sich:

$$\tan\theta' = \frac{x}{y'} = \frac{A\sin\theta}{B\cos\theta + C} \qquad (5)$$

Ist der Sensor abgeglichen, so gilt A=B. Unter dieser Voraussetzung erhält man:

$$\tan\theta' = \frac{\sin\theta}{\cos\theta + \dfrac{C}{A}} \qquad (6)$$

$$0 <= C <= A.$$

Im Spezialfall von C=A=B=1 wird der Spezialfall trigonometrische Funktion des halben Winkels erhalten.

$$\tan\frac{\theta}{2} = \frac{\sin\theta}{\cos\theta + 1} \qquad (7)$$

Daraus folgt:

$$\tan\theta' = \tan\frac{\theta}{2} = \frac{\sin\theta}{\cos\theta + \dfrac{C}{A}} \qquad (8)$$

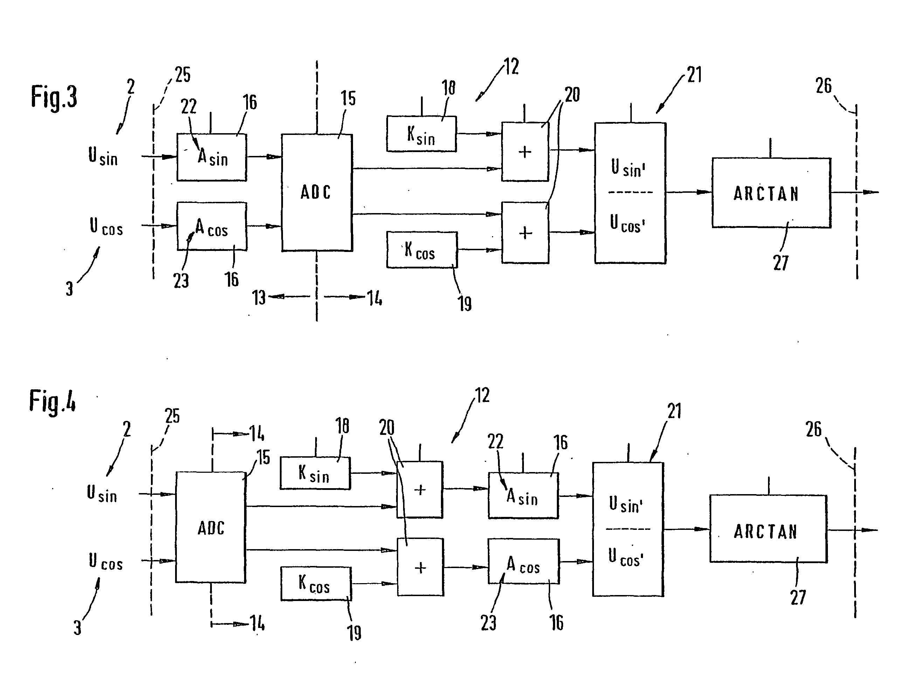

Diese Beziehung beschreibt nun zwei gestreckte Sägezahnverläufe des Absolutwinkels, die durch den Offset C in ihrer Periodenbreite beeinflußt werden können. Ist der Offset C kleiner als die Konstanten A bzw. B gemäß Gleichungen 5 bzw. 8 erhält man zwei sägezahnähnliche Verläufe innerhalb von 360° wie sie beispielsweise im Zusammenhang mit dem Absolutwinkelverlauf in Fig. 1 wiedergegeben sind. Die beiden sägezahnähnlichen Verläufe, gekennzeichnet durch Bezugszeichen 7 und 8, können unterschiedliche Periodenbreiten aufweisen (beispielsweise P1 = 180° + $\alpha$ und P2 = 180° - $\alpha$ für 0 < $\alpha$ < 180°). Diese wären mit dem erfindungsgemäß vorgeschlagenen Verfahren jedoch auch auswertbar, setzen jedoch eine wesentlich komplexere Auswerteschaltung voraus, verglichen mit der in den nachfolgenden Figuren 3 und 4 wiedergegebenen Auswerteschaltungen 12.
Fig. 3 zeigt eine mit dem erfindungsgemäß vorgeschlagenen Verfahren betreibbare Auswerteschaltung 12, die einen Analogteil 13 sowie einen Digitalteil 14 umfaßt.
An der Eingangsseite 25 der Auswerteschaltung 12 stehen die Sinus- bzw. Cosinusanteile 2, 3 der Spannung an. Diese werden zunächst einer Amplitudennormierung 16 unterworfen. Im Rahmen der Amplitudennormierung, erfolgt die Bestimmung von Normierungsfaktoren 22, 23 in der Konfiguration gemäß Fig. 3 noch vor der Signalumwandlung von Analog-in Digitalsignale im A/D-Wandler.
Nach der Umwandlung der Analogsignale in Digitalsignale werden die Ausgangssignale des Analog-/Digital-Wandlers 15 an Summierbausteine 20 weitergegeben. An den Eingängen der Summationsfunktionen 20 liegen im Digitalteil 14 der Auswerteschaltung 12 die Ausgangssignale der Sinusoffset- bzw. Cosinusoffsetfunktionen 18 bzw. 19 an. Den digitalverarbeiteten Spannungsanteilen für Sinus und Cosinus 2 bzw. 3 werden nun die jeweiligen Sinusoffsets 18 bzw. Cosinusoffsets 19 addiert, bevor die nach der Summation in den Summationsbausteinen 20 erhaltenen Signale in einem Funktionsblock zueinander ins Verhältnis gesetzt werden. Die Funktionsblöcke können beispielsweise innerhalb einer Mikrocontrollers als Softwarecode realisiert sein oder auch diskret aufgebaute einzelne Bauelemente ausgebildet sein. Das Spannungsverhältnis 21 $U_{sin'}/U_{cos'}$ geht als Eingangssignal in die Winkelfunktion 27 ein. Am Ausgang des die Winkelfunktion bestimmenden Bausteines liegt ein stabiles Ausgangssignal an, das zur Weiterverarbeitung geeignet ist.

Aus der Darstellung gemäß Fig. 4 geht die Auswerteschaltung gemäß Fig. 3 hervor, jedoch mit dem Unterschied, daß die Normierung der Amplituden ebenso wie die Ermittlung der Offsets für Sinus- und Cosinusanteil sämtlich im Digitalteil 14 der Auswerteschaltung 12 erfolgen.

Die Sinusanteile bzw. Cosinusanteile 2 bzw. 3 der Eingangsgrößen - hier des Spannungssignales - liegen an der Eingangsseite 25 der Auswerteschaltung 12 gemäß Fig. 4 an. Sie werden unmittelbar auf den A/D-Wandler gegeben, der sie analog zur Konfiguration gemäß Fig. 3 mit den in separaten Funktionen 18 bzw. 19 ermittelten Sinusoffsets bzw. Cosinusoffsets auf Summationsfunktionen 20 aufschaltet. Das Ausgangssignal der Summationsbausteine 20 wird in Weiterverarbeitung der Signale im Rahmen einer Amplitudennormierung 16 durch Normierungsfaktoren $A_{sinus}$ 22 bzw. $A_{cosinus}$ 23 nomiert, bevor aus den Ausgangssignalen der Amplitudennomierung 16 analog zur Darstellung gemäß Fig. 3 ein Spannungsverhältnis aus $U_{sinus'}/U_{cosinus'}$ gebildet wird. Das Ausgangssignal, d.h. das Verhältnis der modifizierten Spannungen wird einem Winkelfunktionsbaustein 27 zugeleitet, in welchem in bevorzugten Ausführungsvarianten des erfindungsgemäß vorgeschlagenen Verfahrens die arctan-Funktion implementiert ist.

Der Faktor C, der zum Ausgleichen der Phasendifferenz zwischen den Eingangssignalen herangezogen wird, wird aus den minimalen und maximalen Meßwerten der Eingangssignale 2,3 bestimmt:

$$C = K_{cos} = \frac{U_{max\ cos} - U_{min\ cos}}{2} \qquad (9)$$

An der Ausgangsseite 26 der Auswerteschaltung 12 gemäß des vorliegenden Verfahrens (vergleiche Darstellung Fig. 3 bzw. Fig. 4) wird ein stabiles Signal erhalten, wenn die Bedingung erfüllt ist, $K_{cos} = C$ und $K_{sin} = 0$, diese Werte werden dem Spannungswert hinzuaddiert, so daß im nachgeschalteten Winkelfunktionsbaustein 27 ein um die Phasendifferenz C korrigierter Winkel ausgewertet wird, der in den tatsächlich herrschenden Absolutwinkel umgerechnet ist.

Mit dem erfindungsgemäß vorgeschlagenen Verfahren läßt sich, wenn die Flanken der 360°-Übergänge gemäß der gestreckten Sägezahnanordnungen 9 in Fig. 3 registriert werden, durch deren Aufsummation eine Ermittlung von Winkeln durchführen, die größer als 360° sind. Das erfindungsgemäß vorgeschlagene Verfahren eignet sich demnach auch für Winkelmessysteme mit einem beliebig großen Meßbereich, wobei lediglich eine Sägezahnflankenregistrierung und eine Referenzmarke vorzusehen ist.

Wie aus den Darstellungen gemäß der Fig. 3 und 4 hervorgeht, ist die Auswerteschaltung 12 variabel gestaltbar. So läßt sich beispielsweise die Normierung mittels der Normierungsfaktoren $A_{sinus}$ 22 bzw. $A_{cosinus}$ 23 sowohl im Analogteil 13 der Auswerteschaltung 12 als auch im Digitalteil 14 der Auswerteschaltung 12 gemäß Fig. 4 durchführen.

Dies bietet den Vorteil, daß beim erfindungsgemäß vorgeschlagenen Verfahren zur Erweiterung des Absolutwinkelmeßbereiches keine erhöhten Anforderungen an die Hardwarekomponenten gestellt werden. Damit ist ein Verzicht auf teure 360°-AMR-Sensorsysteme möglich, die in die Sensorik integrierte Spulen aufweisen und daher teure Bauteile darstellen; ferner kann das vorgeschlagene System gut an bereits konfigurierte Sensorsysteme oder bereits im Einsatz befindliche Sensorsystemen angepaßt werden. Bei den Anpassungen sind lediglich die Normierungsfaktoren 22 bzw. 23 sowie die Offsetwerte für Sinus- und Cosinusanteil 18 bzw. 19 neu zu bestimmen. Die Bestimmung dieser neuen Faktoren kann beispielsweise bei der Herstellung oder bei der Anpassung des Auswertesystemes im Rahmen einer Bandendeprogrammierung erfolgen.

Bezugszeichenliste

1    Spannungsverläufe
2    Sinus-Signal
3    Cosinus-Signal
4    magnetischer Winkel

| | |
|---|---|
| 5 | Absolutwinkel (ermittelt) |
| 6 | Spannungsmittelwert |
| 7 | erster 180°-Sägezahn |
| 8 | zweiter 180°-Sägezahn |
| 9 | Winkelstreckung |
| 10 | 360°-Abbildung |
| 11 | Vollumdrehung |
| 12 | Auswerteschaltung |
| 13 | Analogteil |
| 14 | Digitalteil |
| 15 | A/D-Wandler |
| 16 | Amplitudennormierung |
| 17 | Korrekturwertermittlung |
| 18 | Sinus-Offset |
| 19 | Cosinus-Offset |
| 20 | Additionsfunktion |
| 21 | Spannungsverhältnis |
| 22 | Normierungsfaktor $A_{sinus}$ |
| 23 | Normierungsfaktor $A_{cosinus}$ |
| 24 | Winkelfunktion |
| 25 | Eingangsseite |
| 26 | Ausgangsseite |

**Patentansprüche**

1.  Verfahren zur Erweiterung des Absolutwinkelmessbereiches bei Magnetfeldsensoren, unter Einsatz einer Auswerteschaltung (12) mit nachfolgenden Verfahrensschritten:

    • der Addition eines vorgebbaren Offsets C zu einer von zwei von den Magnetfeldsensoren erzeugten, periodisch winkelabhängigen Eingangsgrössen (2,3), die phasenverschoben vorliegen, und
    • dem Bilden des Verhältnisses in Form eines Quotienten von einer der beiden Eingangsgrössen (2,3) zu der Summe aus der anderen, phasenverschobenen Eingangsgrösse (2,3) und dem Offset C,

    wodurch eine Streckung (9) des Absolutwinkelmessbereichs der Magnetfeldsensoren auf eine Vollumdrehung, also 360 Grad, ermöglicht wird.

2.  Verfahren gemäß Anspruch 1, **dadurch gekennzeichnet, daß** die Auswerteschaltung. (12) einen Analogteil (13) und einen Digitalteil (14) enthält.

3.  Verfahren gemäß Anspruch 2, **dadurch gekennzeichnet, daß** eine Amplitudennormierung (16) der phasenverschobenen Eingangsgrößen (2, 3) sowohl im Analogteil (13) als auch im Digitalteil (14) der Auswerteschaltung erfolgen kann.

4.  Verfahren gemäß Anspruch 2, **dadurch gekennzeichnet, daß** Nomierungsfaktoren (22, 23) $A_{sin}$, $A_{cos}$ entweder im Analogteil (13) oder im Digitalteil (14) der Auswerteschaltung (12) bestimmt werden.

5.  Verfahren gemäß Anspruch 1, **dadurch gekennzeichnet, daß** aus den Maximal- und Minimalwerten der phasenverschobenen Eingangsgrößen (2, 3) Offsetwerte (18, 19) für die jeweiligen Eingangsgrößen, die als jeweiliges Sinus- oder Cosinussignal (2, 3) vorliegen, bestimmt werden.

6.  Verfahren gemäß Anspruch 5, **dadurch gekennzeichnet, daß** der Offset C aus den Eingangsgrößen (2, 3) ermittelt wird.

7.  Verfahren gemäß Anspruch 6, **dadurch gekennzeichnet, daß** sowohl ein Offset $K_{sin}$ (22) und ein Offset $K_{cos}$ (23) aus den Maximal- bzw. Minimal werten der Eingangsgrößen (2, 3) bestimmt werden können.

8.  Verfahren gemäß Anspruch 7, **dadurch gekennzeichnet, daß** die erhaltenen Offset-Werte $K_{sin}$ (22) oder $K_{cos}$ (23)

6

in den Eingangsgrößen (2) oder (3) vor Ermittlung des Absolutwinkels hinzuaddiert werden.

9. Verfahren gemäß Anspruch 8, **dadurch gekennzeichnet, daß** an der Ausgangsseite (26) der Auswerteschaltung (12) ein stabiles Ausgangssignal erhalten wird, wenn der Offset $K_{cos}$ (19) dem Offset C entspricht und $K_{sin}$ (18) gleich 0 beträgt.

10. Verfahren gemäß Anspruch 8, **dadurch gekennzeichnet, daß** an der Ausgangsseite (26) der Auswerteschaltung (12) ein stabiles Ausgangssignal erhalten wird, wenn der Offset $K_{sin}$ dem Offset C entspricht und der Offset $K_{cos}$ (19) = 0 beträgt.

**Claims**

1. Method for extending the measuring range of an absolute angle in magnetic field sensors using an evaluation circuit (12), said method having the following method steps:

   • a predefinable offset C is added to one of two input variables (2, 3) which are generated by the magnetic field sensors, are periodically dependent on the angle and are in phase-shifted form, and
   • the ratio is formed as a quotient of one of the two input variables (2, 3) to the sum of the other phase-shifted input variable (2, 3) and the offset C,

   as a result of which it is possible to extend (9) the measuring range of an absolute angle of the magnetic field sensors to a complete revolution, that is to say 360 degrees.

2. Method according to Claim 1, **characterized in that** the evaluation circuit (12) contains an analogue part (13) and a digital part (14).

3. Method according to Claim 2, **characterized in that** the amplitude of the phase-shifted input variables (2, 3) can be normalized (16) both in the analogue part (13) and in the digital part (14) of the evaluation circuit.

4. Method according to Claim 2, **characterized in that** normalization factors (22, 23) $A_{sin}$, $A_{cos}$ are determined either in the analogue part (13) or in the digital part (14) of the evaluation circuit (12).

5. Method according to Claim 1, **characterized in that** offset values (18, 19) for the respective input variables, which are in the form of a respective sine signal or cosine signal (2, 3), are determined from the maximum and minimum values of the phase-shifted input variables (2, 3).

6. Method according to Claim 5, **characterized in that** the offset C is determined from the input variables (2, 3).

7. Method according to Claim 6, **characterized in that** both an offset $K_{sin}$ (22) and an offset $K_{cos}$ (23) can be determined from the maximum and minimum values of the input variables (2, 3).

8. Method according to Claim 7, **characterized in that** the offset values $K_{sin}$ (22) or $K_{cos}$ (23) obtained are added to the input variables (2) or (3) before the absolute angle is determined.

9. Method according to Claim 8, **characterized in that** a stable output signal is obtained on the output side (26) of the evaluation circuit (12) if the offset $K_{cos}$ (19) corresponds to the offset C and $K_{sin}$ (18) is equal to 0.

10. Method according to Claim 8, **characterized in that** a stable output signal is obtained on the output side (26) of the evaluation circuit (12) if the offset $K_{sin}$ corresponds to the offset C and the offset $K_{cos}$ (19) is 0.

**Revendications**

1. Procédé pour l'extension de la plage de mesure d'angle absolu dans des capteurs de champ magnétique, en utilisant un circuit d'analyse (12) avec les étapes de procédé suivantes :

   l'addition d'un décalage C prédéfini à une des grandeurs de départ (2, 3) produites par les capteurs de champ magnétique, fonction régulière de l'angle obtenu et en décalage de phase ; et

la formation du rapport sous la forme d'un quotient d'une des deux grandeurs de départ (2, 3) à la somme à partir de l'autre grandeur de départ (2, 3) en décalage de phase et du décalage C ;

permettant ainsi un élargissement (9) de la plage de mesure d'angle absolu des capteurs de champ magnétique à une rotation complète, donc à 360 degrés.

2. Procédé selon la revendication 1, **caractérisé en ce que** le circuit d'analyse (12) contient une partie analogique (13) et une partie numérique (14).

3. Procédé selon la revendication 2, **caractérisé en ce qu'**une mise à l'échelle de l'amplitude (16) des grandeurs de départ (2, 3) en décalage de phase peut se produire tant dans la partie analogique (13) que dans la partie numérique (14) du circuit d'analyse.

4. Procédé selon la revendication 2, **caractérisé en ce que** les facteurs de mise à l'échelle (22, 23) $A_{sin}$, $A_{cos}$ sont déterminés soit dans la partie analogique (13) soit dans la partie numérique (14) du circuit d'analyse (12).

5. Procédé selon la revendication 1, **caractérisé en ce que** des valeurs de décalage (18, 19) sont déterminées à partir des valeurs maximales et minimales des grandeurs de départ (2, 3) en décalage de phase pour les grandeurs de départ respectives servant de signal de sinus ou de cosinus (2, 3).

6. Procédé selon la revendication 5, **caractérisé en ce que** le décalage C est calculé à partir des grandeurs de départ (2, 3).

7. Procédé selon la revendication 6, **caractérisé en ce qu'**un décalage $K_{sin}$ (22) et un décalage $K_{cos}$ (23) peuvent être déterminés à partir des valeurs maximales et/ou minimales des grandeurs de départ (2, 3).

8. Procédé selon la revendication 7, **caractérisé en ce que** les valeurs de décalage $K_{sin}$ (22) ou $K_{cos}$ (23) obtenues sont intégrées dans les grandeurs de départ (2) ou (3) avant détermination de l'angle absolu.

9. Procédé selon la revendication 8, **caractérisé en ce que** l'on obtient un signal de départ stable au niveau du côté entrée (26) du circuit d'analyse (12) lorsque le décalage $K_{cos}$ (19) correspond au décalage C et que $K_{sin}$ (18) est égal à 0.

10. Procédé selon la revendication 8, **caractérisé en ce que** l'on obtient un signal de départ stable au niveau du côté entrée (26) du circuit d'analyse (12) lorsque le décalage $K_{sin}$ correspond au décalage C et que le décalage $K_{cos}$ (19) = 0.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19722016
- DE 19539134
- DE 19817356
- DE 19818799
- DE 4440214